# EUROPEAN PATENT APPLICATION

(11) **EP 2 712 963 A1**
(43) Date of publication of application: **02.04.2014**
(21) Application number: 13186105.6
(22) Date of filing: 26.09.2013
(51) Int. Cl.: E01H 5/04, E01H 5/09, A01D 42/08

(54) **Snowblower head for a brush cutter device**

(30) Priority: 28.09.2012 IT MO20120237
(71) Applicant: Inox Mark di Ferraroni P.I. Marco, 42021 Bibbiano (RE) (IT)
(72) Inventor: Ferraroni, Marco, 42021 Bibbiano (Reggio Emilia) (IT)
(74) Representative: Corradini, Corrado

(57) **Abstract**

A snowblower fitting, comprising: a casing (2), provided with a front portion (21), through which the snow enters the casing (2) along an entry direction (A), and a rear portion (22), at which the snow exits from the casing (2); a rotor (3), predisposed to convey the snow from the entry portion (21) towards the rear portion (22). The rotor (3) exhibits a rotation axis (X) directed parallel to the entry direction (A) and is provided with blades (4) each of which comprises a front portion (41) and a rear portion (42). The front portion (41) is structured for displacing the snow towards the rear portion (42). The rear portion (42) is structured for projecting the snow in a substantially radial direction with respect to the rotation axis (X),

## Description

The present invention relates to a snowblower fitting that is applicable to a brush cutter.

Brush cutters equipped with electric motors or thermal engines have been widely available and used on the market for many years. They are easy to use and simple to maintain.

As is known, brush cutters are normally used to regulate a height of grass and for cutting bushes or other tasks. Special fittings are present on the market, which can be used for ploughing snow.

The snowblower fittings at present available are however not particularly effective or easy to use.

Some types of snowblower heads are provided with rotary brushes which can be used only to clean light coatings of snow, with the aim of preventing them from freezing and becoming dangerous.

Other types of snowblower fittings are provided with rotary elements provided with rigid blades enabling removal of heavier layers of snow. These heads are however rather heavy and large. The conformation of the rotors further requires that the relative motion between the head and the snow covering be directed perpendicularly to the rotation axis of the rotor, so that the rotor enters into contact with the snowy covering along the whole axial extension thereof. This involves a certain resistance to the advancing of the fitting head, which has to advance slowly.

Further, an example of a snowblower fitting of known type, according to the preamble of claim 1, is described in patent US 3 131 491.

However, the snowblower fitting, though being fixed to a lawn mower (provided with four wheels resting on the ground) is not suitable for fixing to a brush cutter able to he held up, suspended from the ground, by an operator; further it cannot enable an effective loading of the snow, as the snow to be collected offers, due to the conformation of the front portion, a high and excessive resistance to advancement of the snowblower fitting head, especially when the snow to be collected is particularly heavy and dense.

An aim of the present invention is to provide a snowblower fitting that can be combine to a brush cutter which overcomes the drawbacks of the presently-available snowblower fitting.

An advantage of the snowblower fitting of the present invention is that it is practical and easy to handle.

A further advantage of the snowblower fitting of the present invention is that it is relative compact.

A further advantage of the snowblower fitting of the present invention is that it is effective also in the presence of a thick, wet and/or partially frozen snowy covering.

The aims and advantages are attained by the characteristics of the invention as reported in the independent claim. The dependent claims delineate preferred and/or particularly advantageous aspects of the invention.

In particular, the invention comprises: a snowblower fitting, comprising: a casing, provided with a front portion, through which the snow enters the casing along an entry direction, and a rear portion, at which the snow exits from the casing; a rotor, predisposed to convey the snow from the entry portion towards the rear portion; wherein: the rotor exhibits a rotation axis directed parallel to the entry direction; the rotor is provided with blades each of which comprises a front portion and a rear portion; the front portion is structured for displacing the snow towards the rear portion; the rear portion is structured for projecting the snow in a substantially radial direction with respect to the rotation axis (i.e. centrifugal).

In particular the casing comprises a V-shaped lower edge with a vertex of the V facing towards the rear portion.

In a further aspect of the invention, protectable also independently with respect to the above, the invention discloses a snowblower fitting, comprising: a casing, provided with a front portion, through which the snow enters the casing along an entry direction, and a rear portion, at which the snow exits from the casing; a pair of counter-rotating rotors, each predisposed for conveying the snow from the entry portion towards the rear portion; wherein each rotor exhibits: a rotation axis directed parallel to the entry direction; blades, each of which comprises a front portion and a rear portion, wherein the front portion is structured for displacing the snow towards the rear portion and the rear portion is structured for projecting the snow in a substantially radial direction with respect to the rotation axis (i.e.centrifugal).

In a further aspect of the invention a brush cutter comprises a support bar grippable by an operator, to a first end of which is associated a motor for activating a rotating shaft an end portion of which is located at a second end of the support bar.

The brush cutter in particular comprises a snowblower fitting, as described above, which is removably associated to the second end of the support bar, for example in such a way that the rotor or rotors receive rotary motion from the motor of the brush cutter itself (for example via a reducer fixed to the snowblower fitting). Further characteristics and advantages of the present invention will more fully emerge from the detailed description that follows of an embodiment of the invention, illustrated by way of non-limiting example in the figures, in which:
figure 1 is an axonometric view from a front angle of the snowblower fitting according to the present invention;
figure 2 is the snowblower fitting from which an upper wall (25) has been removed;
figure 3 is an axonometric view from a rear angle of the snowblower head according to the present invention;
figure 4 is a first axonometric view of a rotor (3) of the snowblower fitting;
figure 5 is a second axonometric view of the rotor (3) of figure 4;
figure 6 is a section according to a vertical median plane of a reducer of the snowblower fitting of the invention;

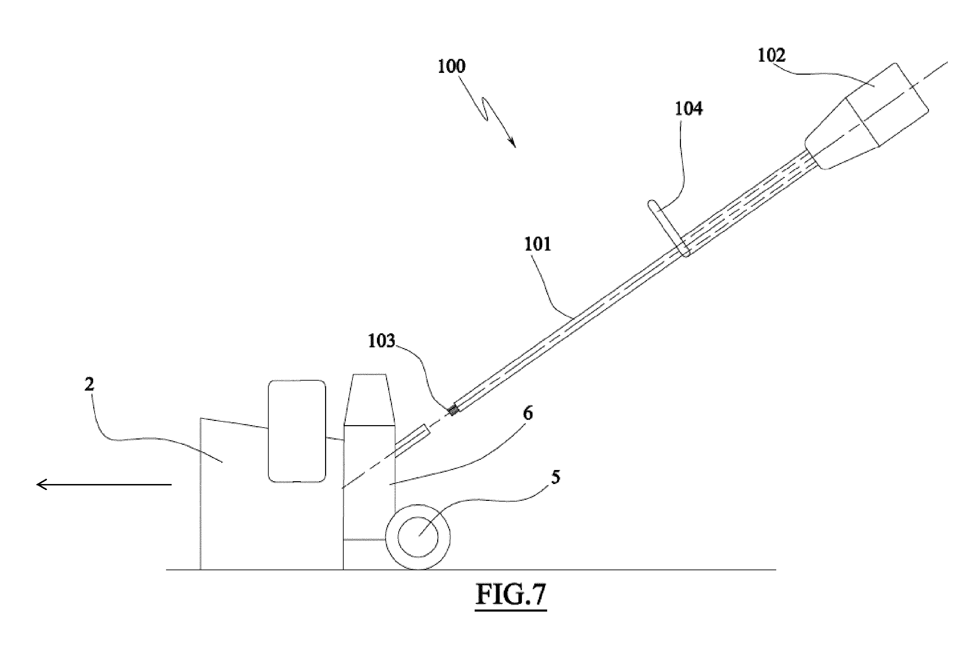

figure 7 is the snowblower fitting of the invention, associated to a brush cutter;

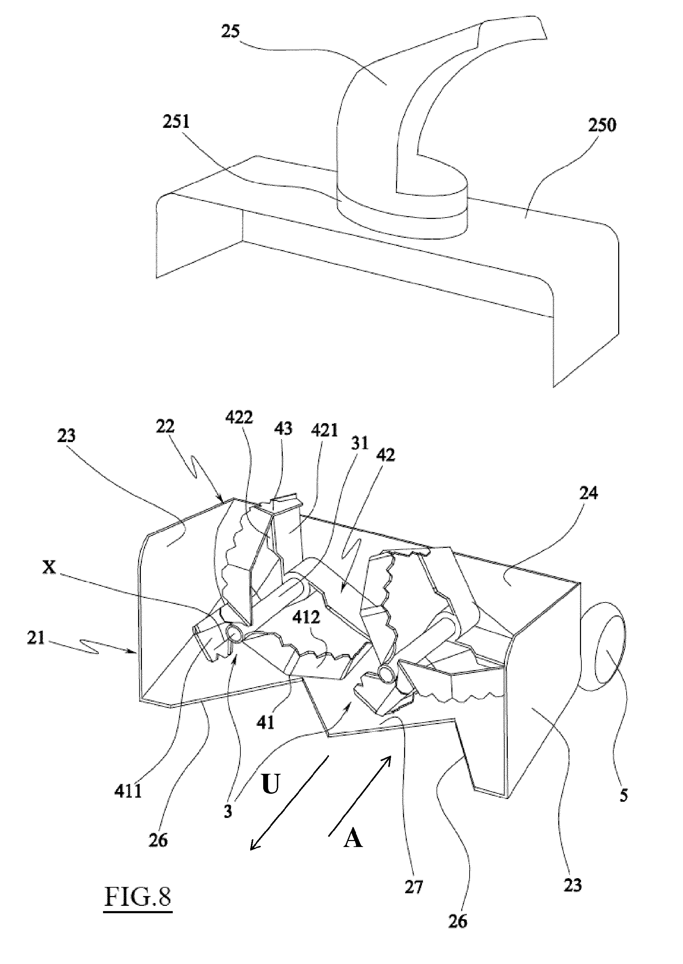

figure 8 is an axonometric view, partially exploded, from a front angle of a second embodiment of the snowblower fitting according to the present invention;

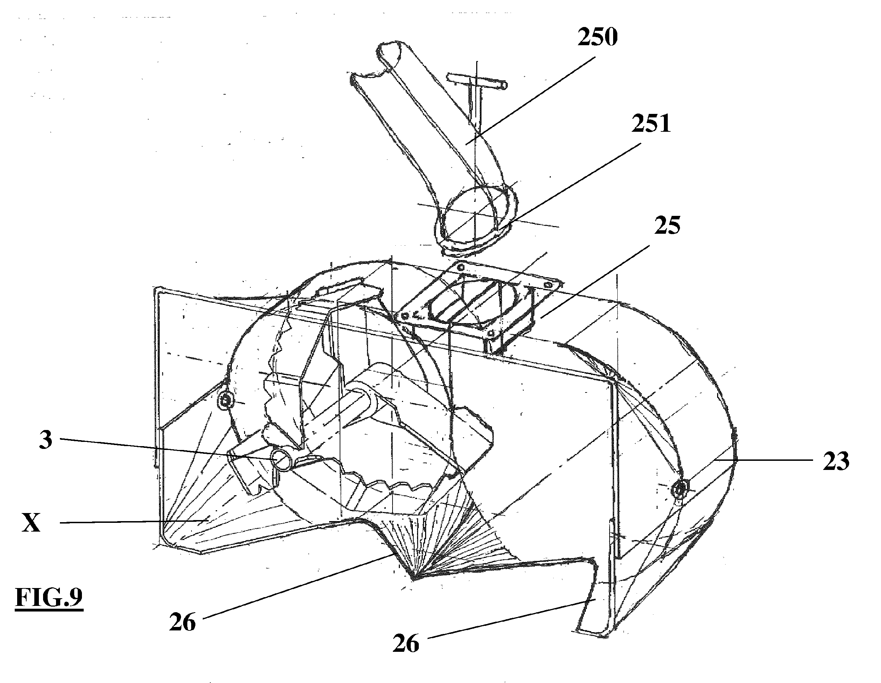

figure 9 is an axonometric view from a front angle of figure 8;

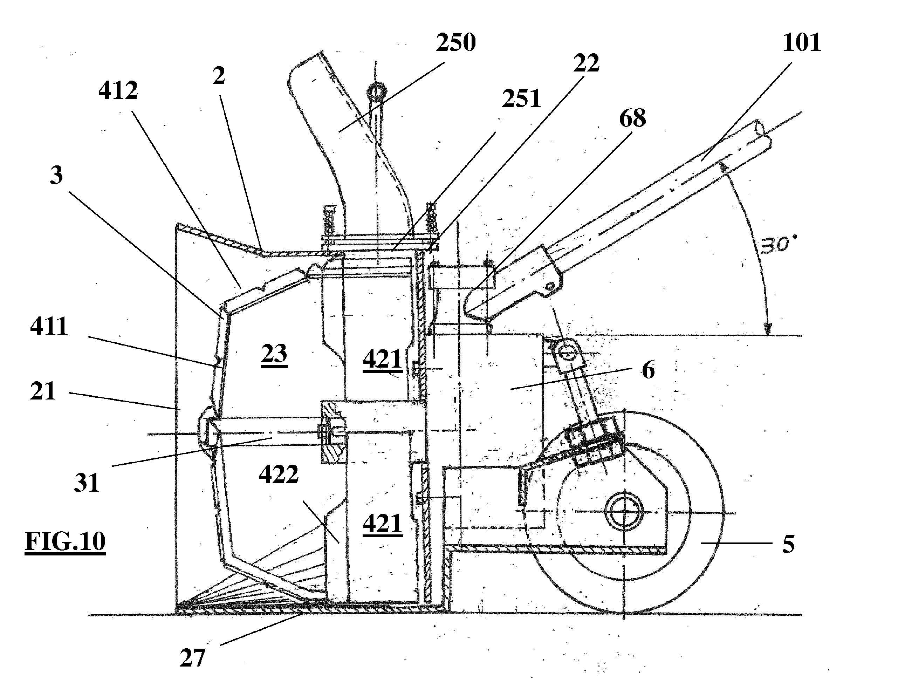

figure 10 is a section view with respect to a vertical median plane of figure 9;
figure 11 is an axonometric view (partially exploded) from a rear angle of a reducer of the snowblower fitting, according to the second embodiment of the invention.

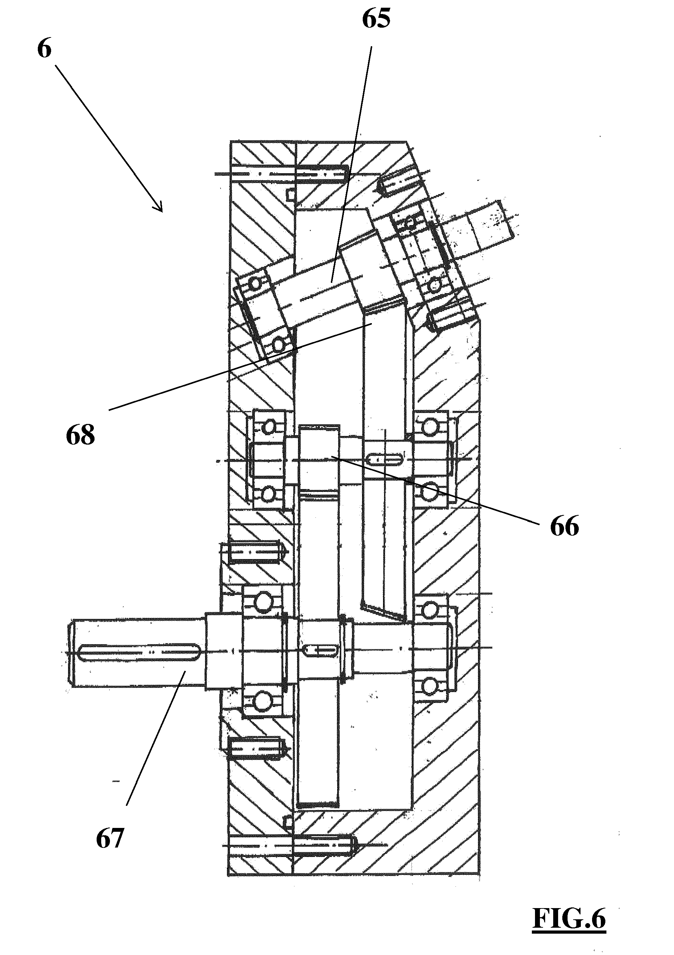

With reference to the above-mentioned figures, a snowblower fitting is illustrated, applicable as an auxiliary tool and being usable in substitution for a brush cutter (illustrated for example in figure 6).

The brush cutter 100 comprises a support bar 101, for example comprising a hollow tube, at a first end of which a motor 102 is located, and at a second end of which, opposite the first, a rotating shaft 103 is located.

A handle 104 is located in an intermediate position of the support bar 101, grippable by an operator for supporting the brush cutter 100, the second end being located inferiorly and with the longitudinal axis of the support bar 101 inclined, for example, by an angle comprised between 20° and 30° with respect to the ground. The brush cutter 100, as is known, is designed to be supported by an operator, for example without the aid of rest points on the ground or wheels or the like, for example using the handle 104 and/or auxiliary straps.

The command means of the motor 102 are also associated to the handle 104. As will be more fully described in the following, the snowblower fitting is removably applicable to the second end of the support bar 101.

The snowblower fitting of the present invention comprises a casing 2, provided with a front portion 21, through which the snow enters the casing 2 along an entry direction A, and a rear portion 22, at which the snow exits from the casing 2. The head further comprises a rotor 3, predisposed to convey the snow from the entry portion towards the rear portion 22. As with the majority of snowblower fittings, the casing 2 is advanced by the user on the snowy surface along an advancement direction U. The entry direction A of the snow is substantially parallel to the advancement direction U imposed by the user, and the entry direction of the snow is opposite the advancement direction of the casing 2.

The rotor 3 advantageously exhibits a rotation axis X directed parallel to the entry direction A. With respect to presently-available snowblower fittings, this enables a considerable reduction in the contact section of the rotor 3 with the snowy surface, so that the fitting offers a significantly lower resistance to advancement. The rotor 3 is provided with blades 4, each of which comprises a front portion 41 and a rear portion 42 with respect to the entry direction A.

The front portion is structured for displacing the snow towards the rear portion 42, which the rear portion 42 is structured to project the snow in a substantially radial direction (i.e. centrifugal) with respect to the rotation axis X (for example with a radial component and a tangential component).

The front portion 41 of each blade comprises a front part (411) which extends radially with respect to the rotation axis (X) and exhibits an inclination that is such as to push the snow towards the rear portion (42) by means of the rotation about the rotation axis (X).

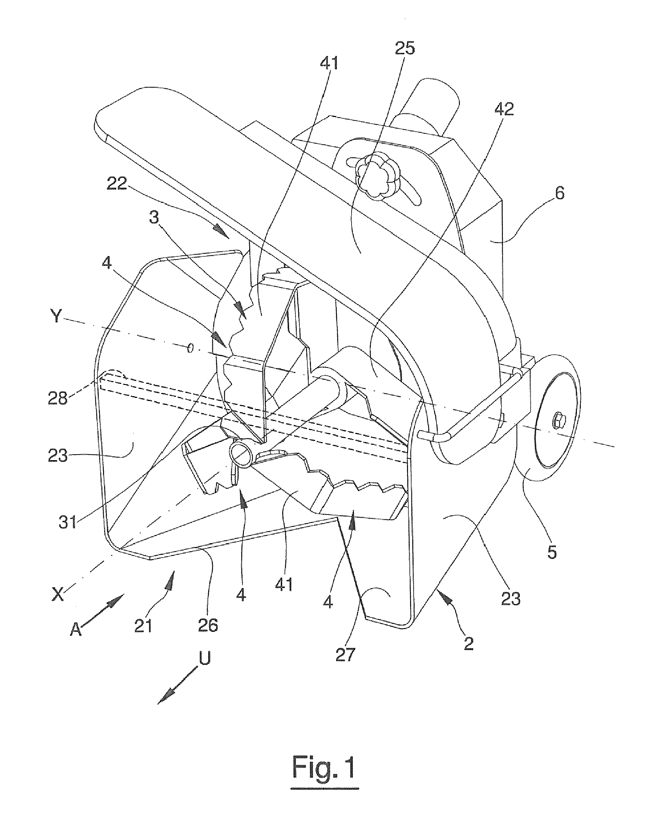

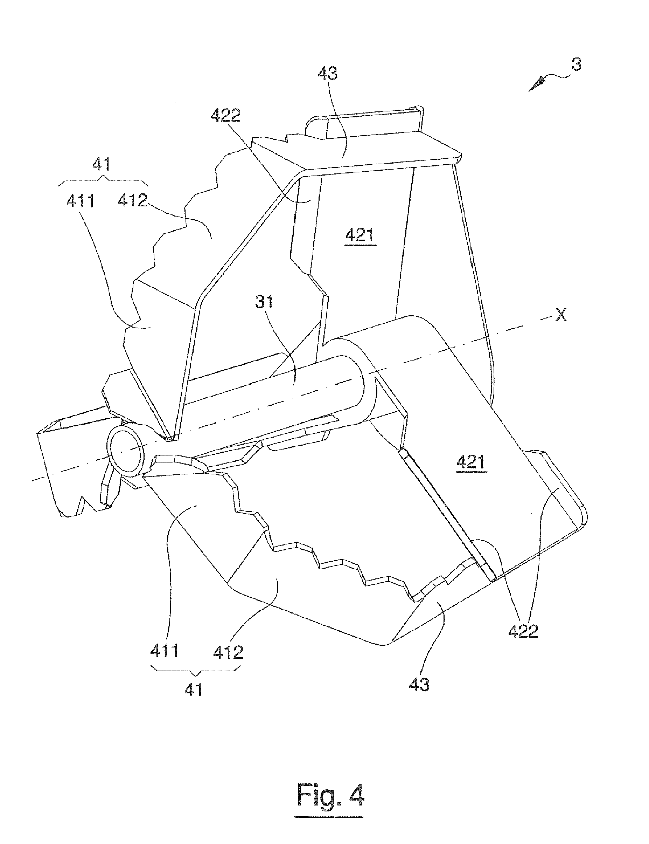

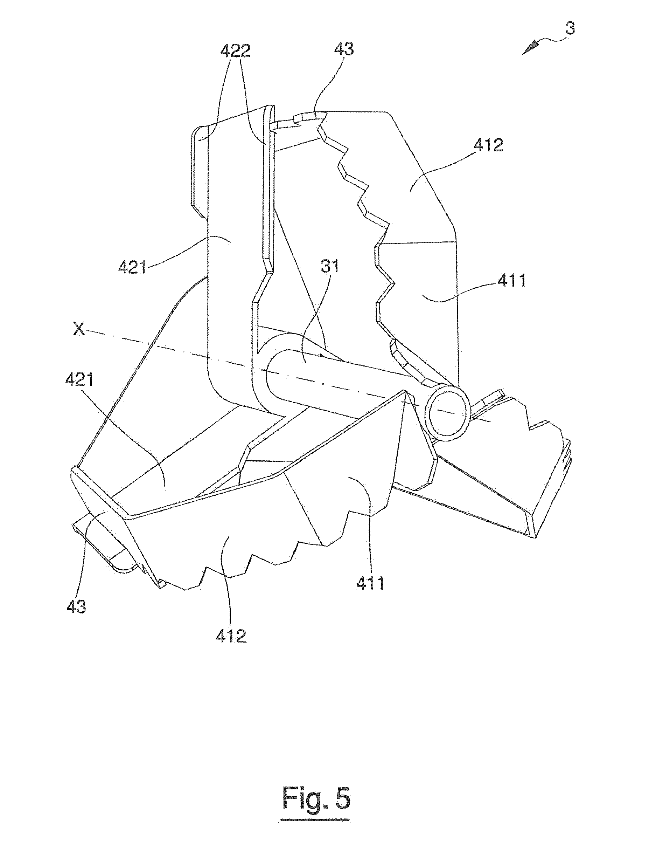

In particular, the front part 411 is divergingly inclined, in the rotation direction of the rotor 3, with respect to a plane that is perpendicular to the rotation axis X. The rotor 3 is provided with a rotation shaft 31 that is concentric to the rotation axis X. The front part 411 comprises a front end fixed to the rotation shaft 31. As visible in figures 1, 2, 4 and 5, the front part 411 of each blade 4 exhibits at least an end portion 412 that is more external with respect to the rotation axis X which is inclined backwards, towards the rear portion 42. The inclination of this end portion 412 enables reducing the front section of the blade 4, i.e. the section which is opposite the advancement U of the rotor 3 with respect to the snowy surface, without penalizing the quantity of snow contacted by the rotor 3.

The rear portion 42 of each blade comprises a plate 421 which extends radially and lies on a parallel plane to the rotation axis X.

By virtue of its conformation, the plate 421 collects the snow pushed backwards by the front portion 41 and, by effect of the centrifugal force produced via the rotation about the axis X, projects the collected snow in a radial direction (i.e. centrifugal).

To increase the effectiveness of the plate 421 in collecting and projecting the snow, the plate 421 comprises two side walls 422 for facilitating the lateral containing of the snow.

At external ends thereof, i.e. at ends thereof most distant from the rotation axis X, the front portion 41 and the rear portion 42 are conjoined by a lateral portion 43. The lateral portion 43 also exhibits, at least in a portion contiguous to the front portion 41, a diverging inclination with respect to the rotation direction of the rotor, such as to push the snow in a radial direction towards the rotation axis X.

In particular the lateral portion 43 is shaped to brush the internal surface of the casing 2 in such a way as to totally remove the snow collected laterally of the rotor 3 between the casing 3 and the rotor 3.

The lateral portion 43 further contributes to stiffening the structure of each blade 41, significantly increasing the flow of snow collected and projected radially. Each blade 4 of the rotor (for example three in number) is conformed substantially in an upturned C-shape, in which the opposite ends are fixed to the rotation shaft 31.

In particular, the front part of the blade 4 is defined by the front portion 41, the central part by the lateral portion 43 and the rear part by the rear portion 42. The blade 4, in particular at least the front portion 41 thereof, comprises at least a sawtooth cutting edge.

The sawtooth cutting edge of the blade 4 comprises, for example, a plurality of teeth or claws, which for example are able to scratch at and abrade the layer of snow during the advancement of the snowblower fitting.

In particular, the front portion 41 (in the illustrated example both the front part 411 and the end portion 412) and the lateral portion 43 exhibit a sawtooth edge, i.e. the front edge with respect to the rotation of the rotor 3.

It is however possible for only the front part 411 of the blade 4 to exhibit a sawtooth edge as described above.

The casing 2 preferably exhibits a tapered conformation from the front portion 21 towards the rear portion 22, so as to facilitate the collection of the snow and the supply thereof to the rotor 3.

In particular the casing 2 comprises two side walls 23 which, starting from the front portion 21, converge to a rear wall 24. An upper wall 25 is connected to the lower wall 24, which upper wall 25 laterally conjoins to the side wall 23 situated on the side where the blades 4 of the rotor 3 have an ascending motion in rotation thereof about the rotation axis X.

The upper wall 25 is inclined upwards and projects above the rotor 3 to drive the snow that is expelled by centrifugal force from the blades 4 in a transversal direction to the rotation axis X.

An end of the upper wall 25 is thus free, or does not join with the opposite side wall 23, in order to allow the expulsion of the snow driven by the rotor 3.

The angle of inclination of the upper wall 25 with respect to a horizontal plane is adjustable so as to enable adjustment of the range of the snow expelled.

The casing 2 comprises, for example at the rear wall 24, fixing means (which will be described below) removably constraining the snowblower fitting to the grass and brush trimmer 100.

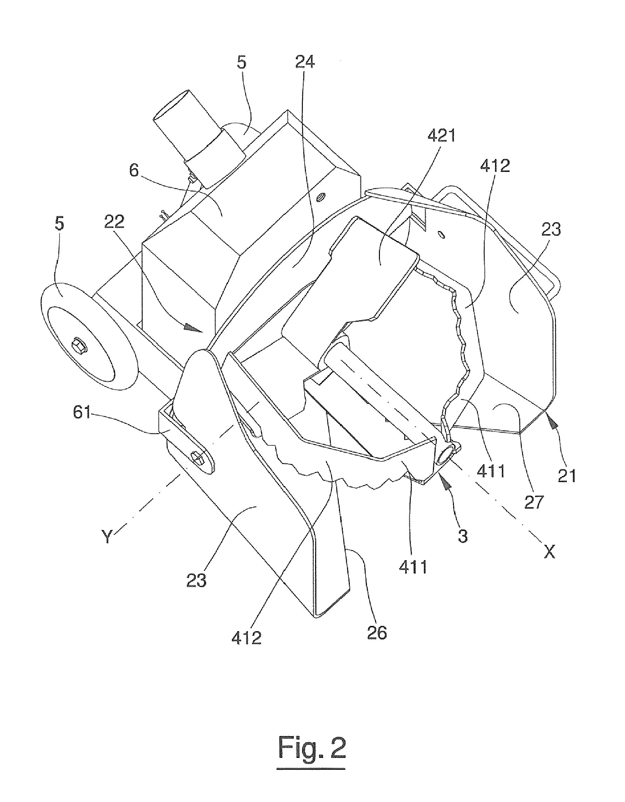

As shown in figures 1 and 2, the rotor 3 is placed in a retracted position with respect to a front edge of the side walls 23, i.e. the rotor 3 does not project forward of the side walls 23. This helps to protect the rotor 3 in case of impact against vertical obstacles, such as a wall or a step, as the contact with the obstacle occurs at the front edge of the side walls 23.

A cross member 28 can be included for further protection of the rotor 3 from accidental contact, which cross member is constrained to the side walls 23 in proximity of the front edge thereof.

The crossbar 28 is positioned in front of the rotor 3 preferably in an upper position relative to the rotation axis X.

A bottom wall 27 of the casing 2 preferably comprises a V-shaped lower edge 26 (front), with the vertex of the V directed toward the rear portion 22 and the rear wall 24.

The lower edge 26 is formed on the bottom wall 27 that connects the side walls 23 of the casing. The "V" profile (or "U" profile, or in any case able to define an open portion communicating by a side thereof with the front portion 21 of casing 2) of the lower edge 26 facilitates the sliding of the casing 2 and prevents the snow from being pushed forward before entering in contact with the rotor 3.

In effect, thanks to the "V" conformation of the of the lower edge 26 of the casing 2, the snow remains resting on the ground until the time it is removed by the rotor 3.

To facilitate advancement by the user, the casing 2 is provided with wheels 5. These wheels 5 are posteriorly constrained to the casing 2 with a horizontal rotation axis.

In addition to promoting the advancement of the snowblower fitting, the wheels 5 enable the user to change the angular position of the snowblower fitting head with respect to the rotation axis of the wheels, for example so as to facilitate the overcoming of obstacles such as steps, depressions or the like.

In addition, the wheels 5 support the snowblower fitting without its bearing on the user's arms as he or she grips the brush cutter 100.

To connect the rotation shaft 31 of the rotor 3 to a drive shaft, for example the rotating shaft 103 of a brush cutter 100, the snowblower fitting is provided with a reducer 6 associated to the casing 2.

The reducer 6 is provided with bevel gears, not shown in detail as known to the technical expert in the sector, which enable the rotation shaft 103 of the brush cutter 100 and the rotation shaft 31 of the inclined rotor 3 to be maintained at a desired reciprocal angle.

The reducer 6 (see figure 6) preferably comprises three axes 65,66,67 and a bevel gear 68, so that the rotor 3 is maintained in the rotation direction of the rotation shaft 103.

The inclination of the rotation axis of the input axis 65 and therefore the input gear destined to couple with the rotary shaft 103, is preferably approximately 20° to the output axis 67 and is destined to support the rotation shaft 31 of the rotor 3, and thus with respect to the rotation axis X of the rotor 3.

The rotating shaft 103 of the brush trimmer 100 for example rotates at a speed of about 8000 revolutions/minute.

The reducer 6 is configured so that the output axis 67 rotates at a speed of about 600-700 revolutions/minute, in the example 625 rpm.

A clutch is located, for example, between the input axis 65 and the rotation shaft 103, for constraining the two in rotation.

For example, the rotation shaft 103 is of a splined type and fits into an appropriate grooved bushing, made for example in the input axis or in an intermediate fitting fixable to the input axis.

The rear wall of the gear unit 6 comprises an inclined bushing in which the input axis 65 is accommodated. The bushing can be splined on the support bar 101 of the brush cutter 100 and is capable of defining (together with the clutch) fixing means constraining the brush cutter 100 to the snowblower fitting.

The gear unit 6 is preferably associated to the casing 2 with freedom to rotate about an adjustment axis Y (parallel to the rotation axis of the wheels 5).

In particular the reducer 6 is solidly constrained to the rear wall 24 of the casing 2. The rear wall 24 can then rotate about the adjustment axis Y with respect to the side walls 23.

The rear wall 24 preferably has a circular shape and is positioned so as to remain always between the side walls 23 and the bottom wall 27, including at the end adjustment positions.

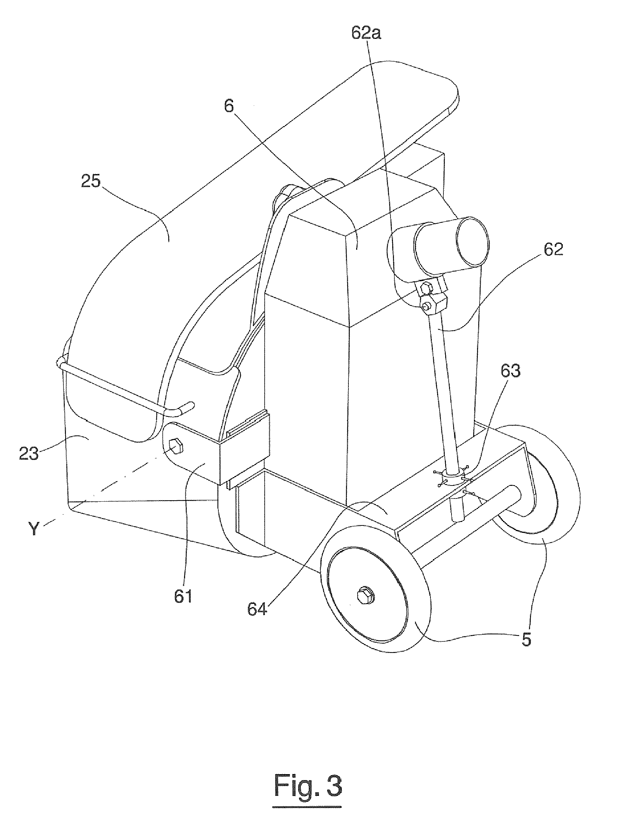

As shown in figure 3, the reducer 6 is provided with two lateral brackets 61 predisposed to be connected to the side walls 23 of the casing 2 rotatably about the adjustment axis Y.

Adjustment means are predisposed to adjust the angular position of the gear unit 6 with respect to the adjustment axis Y. The adjustment means preferably comprise a threaded rod 62, arranged with its longitudinal axis lying in a vertical plane. The threaded rod 62 is associated at an end 62a thereof to the reducer 6 rotatably about an parallel axis to the axis of adjustment Y. The threaded rod 62 is screwed into a pair of ringnuts 63 positioned on opposite sides of a plate 64 solidly constrained to the casing 2.

In particular, the threaded rod 62 is arranged through a slot afforded in the plate 64 solidly constrained to the casing 2. A first ringnut 63 is screwed onto the threaded rod 62 above the plate 64, while the second ringnut is screwed on the rod 62 below the plate 64.

By rotating one of the two rings 63 the portion of threaded rod 62 can be shortened or lengthened between the threaded end 62a associated to the reducer 6 and the ringnut 63.

Once the axial position of the threaded rod 62 has been adjusted, the other ringnut 63 can be tightened to contact the plate 64 and lock the position of the rod. The adjustment of the axial position of the threaded rod 62 determines the variation of the angular position of the reducer 6, and the rotor 3 about the adjustment axis Y. The adjustment angle of the angular position of the reducer 6 is approximately +/-10° with respect to a starting position in which the rotation axis X is horizontal. In this way, the inclination of the rotating shaft 103 of the brush trimmer 100 can also be varied with respect to a horizontal plane, enabling the inclination to be adjusted for users of different heights.

The above-described adjustment means are positioned in the rear part of the casing 2, above the wheels 5, to allow for easy manipulation by the user even when the snowblower fitting is associated to the rotation shaft 103 of the brush cutter 100.

A second embodiment of the snowblower fitting, protectable even independently of the first embodiment described above, is shown in figures from 8 to 11, in which the reference numbers of the components that are identical or have the same function are the same as those of the first embodiment described above.

The snowblower fitting, according to the second embodiment, comprises a casing 2, for example alike to that of the first embodiment illustrated in figures 1 to 6. The casing 2, in particular, is provided with a front portion 21, through which the snow enters the casing 2 along an intake direction A, and a rear portion 22, where the snow exits the casing 2.

The snowblower fitting comprises a pair of counter-rotating rotors 3, each predisposed to convey the snow from the intake portion 21 towards the rear portion 22, where the rotation axis of each rotor 3 is directed parallel to the direction X of intake A.

The rotors 3 are advantageously mutually identical and symmetrical with respect to a vertical plane passing through the midpoint between the rotation axes X. Further, each rotor 3 is provided with blades 4 (for example 3 in number) each of which comprises a front portion 41 and a rear portion 42.

The front portion 41 is structured so as to displace the snow towards the rear portion 42; the rear portion 42 is structured to project snow in a radial direction with respect to the rotation axis X and upwards in the central area.

The counter-rotating rotors 3 are arranged with a rotation axis X thereof parallel and lying in a substantially parallel plane to the support surface of the casing 2, or to the ground.

As in the first embodiment, for example, the front portion 41 of each blade comprises a front part 411 which extends radially of the rotation axis X and has an inclination that is such as to push the snow towards the rear portion 42 by rotation around the rotation axis X.

In particular, the front part 411 is divergingly inclined, in the rotation direction of the rotor 3, relative to a perpendicular plane to the rotation axis X.

The rotor 3 is provided with a rotation shaft 31 that is concentric to the rotation axis X.

The front part 411 comprises a front end fixed to the rotation shaft 31.

Further, the front part 411 of each blade 4 exhibits at least an end portion 412 that is more external with respect to the rotation axis X, which is tilted backwards towards the rear portion 42.

The rear portion 42 of each blade comprises a plate 421 which extends radially and lies on a parallel plane to the rotation axis X.

The plate 421, by virtue of its conformation, collects the snow pushed backwards from the front portion 41 and by the centrifugal force effect produced by the rotation around the X axis, and projects the snow collected in the radial direction, for example upwards and towards the central area of the casing 2.

To increase the effectiveness of the plate 421 in collecting and projecting the snow, the plate 421 comprises two lateral walls 422 for facilitating the lateral containment of the snow.

At the external ends thereof, i.e. at the most distant ends from the rotation axis X, the front portion 41 and rear portion 42 are joined to a lateral portion 43.

The lateral portion 43 also exhibits, at least in a section adjacent to the front portion 41, an inclination that diverges with respect to the rotation direction of the rotor 3, so as to propel the snow in the radial direction towards the rotation axis X.

In particular, the side portion 43 is shaped so as to brush the internal surface of the casing 2 and thus to totally remove the collected snow laterally of the rotor 3 between the casing 2 and the rotor itself.

The lateral portion 43 also helps to stiffen the structure of each blade 41, greatly increasing the flow of snow collected and projected radially.

Each blade 4 of the rotor 3 (in the example three in number) is substantially upturned-C-shaped, with the opposite ends of the "C" fixed to the rotation shaft 31.

In particular, the front section of the blade 4 is defined by the front portion 41, the central section by the lateral portion 43 and the rear section by the rear portion 42.

In particular the blade 4, at least the front portion 41 thereof, comprises at least a sharp serrated edge.

The serrated edge of the blade 4 includes, for example, a plurality of teeth or claws, which for example are able to scratch and abrade the layer of snow during the advancement of the snowblower fitting.

In particular, the front portion 41 (in the illustrated example both the front part 411 and the end part 412) and the lateral portion 43 have a serrated edge, being the front edge relative to the rotation direction of the rotor 3.

However, it is possible for only the front part 411 of the blade 4 to exhibit a serrated edge as described above.

The casing 2 preferably has a tapered shape from the front portion 21 towards the rear portion 22, to facilitate the gathering of the snow and the feeding of the snow to the rotor 3.

In particular, the casing 2 comprises two side walls 23 which, starting from the front portion 21, converge to a rear wall 24. Connected to the rear wall 24 is an upper wall 25 which joins laterally with the side walls 23.

The casing 2 comprises, for example at the rear wall 24, fixing means (which will be described below) for removably constraining the snowblower fitting to the brush cutter 100.

The upper wall 25 affords a through-hole in which a funnel 250 is engaged and is rotatably associated (with respect to a substantially vertical axis) to the upper wall 25.

In practice, the funnel 250 is associated to the upper wall 25 by means of a rotational flange 251, which for example enables a rotation of 180°-270°.

By rotating the funnel 250 it is possible to orientate the range of snow gathered by the rotors; for example, it is possible to accumulate the snow on one side only as the snowblower moves to and fro on the ground to be cleaned.

Each rotor 3 is located in a retracted position with respect to a front edge of the side walls 23, i.e. the rotor 3 does not project anteriorly of the side walls 23. This enables protecting the rotor 3 in case of impact against vertical obstacles, such as a wall or a step, as the contact with the obstacle occurs at the front edge of the side walls 23.

For further protection of the rotor 3 with respect to accidental contact, a crossbar can be constrained to the side walls 23 in proximity of the front edge.

The crossbar 28 is positioned in front of the rotor 3, preferably in an upper position in relation to the rotation axis X.

A bottom wall 27 of the casing 2 preferably comprises a V-shaped lower edge 26 (front), with the vertex of the "V" directed towards the rear portion 22 and the rear wall 24.

In the preferred and illustrated embodiment, the bottom wall 27 comprises two lower edges 26, each V-shaped and contiguous to one another, so as to define a double-V conformation.

In practice, each rotor 3 can be substantially superimposed in plan view on a respective lower edge 26.

The lower edge 26 is fashioned on a bottom wall 27 that connects the side walls 23 of the casing. The V profile (or "U" or in any case a profile defining an open portion communicating via a side thereof with the front portion 21 of casing 2) of the lower edge 26 facilitates the sliding of the casing 2 and prevents the snow from being pushed forward before entering into contact with the rotor 3.

In effect, thanks to the conformation double-V of the lower edge 26 of the casing 2, the snow remains resting on the ground until it is removed by the rotors 3. The vertex between the two edges of the "V", for example, is located posteriorly of the most advanced portion of the side walls 23 of the casing 2.

Also, a wedge-shaped rising surface is defined on the vertex comprised between the two edges of the "V", which surface gradually and continuously rises from the front portion 21 towards the rear portion 22, with connecting surfaces that are substantially continuous with the bottom wall 27.

To facilitate the user's advancement, the casing 2 is provided with wheels 5. These wheels 5 are located posteriorly of the casing 2 and have a horizontal rotation axis.

As well as facilitating the advancement of the snowblower fitting, the wheels 5 enable the user to change the angular position of the snowblower fitting with respect to the rotation axis of the wheels, for example so as to facilitate the overcoming of obstacles such as steps, depressions or other like obstacles.

In addition, the 5 wheels enable the snowblower fitting to be supported without weighing heavily on the arms of the person using the brush cutter 100.

To connect the rotation shaft 31 of the rotor 3 with a motor shaft, for example the rotation shaft 103 of the brush cutter 100, the snowblower fitting is provided with a reducer 6 associated with the casing 2.

The reducer 6 is provided with gears, not illustrated in detail since known to the technical expert in the sector, which enable maintaining the rotation shaft 103 of the brush cutter 100 and the rotation shaft 31 of the rotors 3 inclined to one another at a desired reciprocal angle.

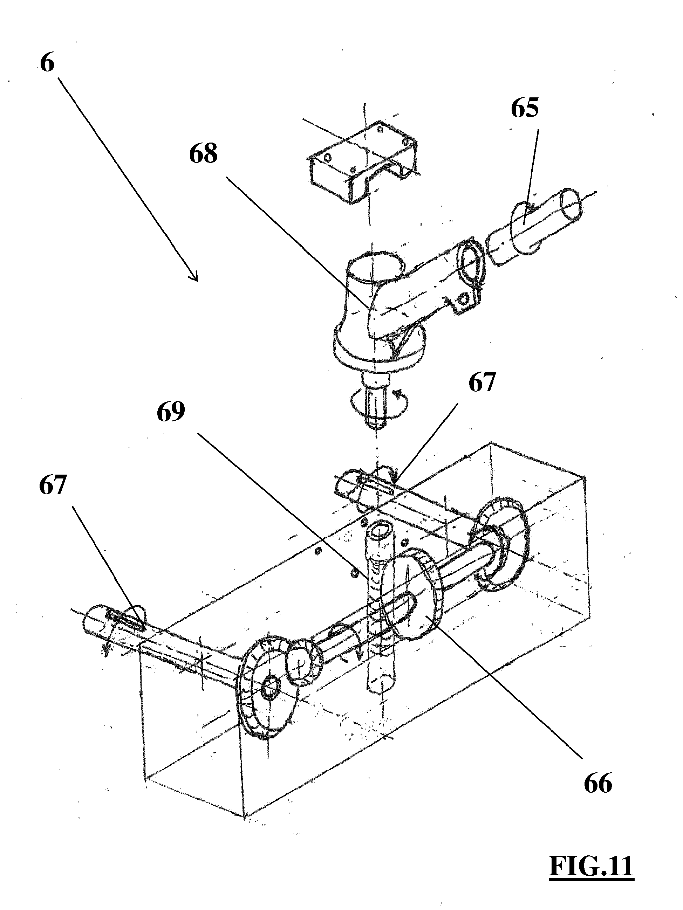

The gear unit 6 (see figure 11) preferably comprises a bevel gear pair 68 in which an inclined input axis 65 transmits motion to a worm screw 69 (substantially vertical).

The bevel defines the fixing means removably constraining the snowblower fitting to the brush cutter 100.

The worm gear is designed to enmesh with a cogwheel 66 keyed on an intermediate distributing axis that bears at opposite ends thereof a respective gear able to transfer the rotary motion into two counter-rotating output axes 67. The inclination of the rotation axis of the input axis 65 and there of the input gear, destined to couple with the rotation shaft 103, is preferably approximately 20-30° with respect to the output axes 67 intended to support respectively the rotation shafts 31 of the rotors 3, and therefore also with respect to the rotation axes X of the rotors 3.

The rotating shaft 103 of the brush cutter 100 for example rotates at a velocity of about 8000 revolutions/minute.

The reducer 6 is configured so that the output axis 67 rotates at a velocity of about 600-700 revolutions/minute.

A clutch is present, for example between the input axis 65 and the rotation shaft 103 which clutch constrains the axis and shaft in rotation.

For example the rotating shaft 103 is of a splined type and fits into a special grooved bushing, realised for example in the input axis or in an intermediate socket fixable to the input axis.

Preferably, the gear 6 is associated to the casing 2 with freedom to rotate about an adjustment axis (parallel to the axis of rotation of the wheels 5).

In particular, the reducer 6 is solidly constrained to the rear wall 24 of the casing 2. The rear wall 24 can then rotate about the adjustment axis with respect to the side walls 23, as above illustrated and described for the first embodiment of the snowblower fitting.

In practice, the rear wall 24 is hinged to a portion (lower) of the side walls 23. Preferably, the rear wall 24 is substantially in a flat-down figure of eight, (i.e. is bilobed) and is positioned so as to remain always between the side walls 23 and the bottom wall 27 also at the extreme adjustment positions.

In practice, the side walls 23 and the bottom wall 27 define two intersected cylindrical portions, the front base of which is open, the rear base of which is closed by the rear wall 24 and the axial thickness of which is substantially equal to the axial width of the rear portion 42 of the blades 4.

Adjustment means, completely identical to those described above, are arranged so as to adjust the angular position of the reducer 6 with respect to the adjustment axis.

## Claims

1. A snowblower fitting, comprising: a casing (2), provided with a front portion (21), through which the snow enters the casing (2) along an entry direction (A), and a rear portion (22), at which the snow exits from the casing (2); a rotor (3), configured to convey the snow from the entry portion towards the rear portion (22); wherein: the rotor (3) exhibits a rotation axis (X) directed parallel to the entry direction (A); the rotor is provided with blades (4) each of which comprises a front portion (41) and a rear portion (42); the front portion (41) is structured for displacing the snow towards the rear portion (42); the rear portion (42) is structured for projecting the snow in a substantially radial direction with respect to the rotation axis (X), **characterised in that** the casing (2) comprises a V-shaped lower edge (26) with a vertex of the V facing towards the rear portion (22).

2. The snowblower fitting of claim 1, wherein each blade (4) is substantially C-shaped, wherein both ends, front and rear, are fixed to a rotation shaft (31) which defines the rotation axis (X) of the rotor (3).

3. The snowblower fitting of claim 1, wherein the front portion (41) of each blade comprises a front part (411) which extends radially with respect to the rotation axis (X) and exhibits an inclination that is such as to push the snow towards the rear portion (42) by means of the rotation about the rotation axis (X).

4. The snowblower fitting of claim 1, wherein the rear portion of each blade comprises a plate (421) which extends radially and lies on a parallel plane with respect to the rotation axis (X).

5. The snowblower fitting of claim 4, wherein the plate (421) comprises two side walls (422) for facilitating containing of the snow.

6. The snowblower fitting of claim 1, wherein the front portion (41) and the rear portion (42) of each blade (4) are conjoined by a lateral portion (43) which exhibits, at least in a part contiguous to the front portion (41), a diverging inclination with respect to the rotation direction of the rotor, such as to push the snow in a radial direction towards the rotation axis (X).

7. The snowblower fitting of claim 1, wherein each blade (4) exhibits at least a sawtooth edge.

8. The snowblower fitting of claim 1, wherein the casing (2) comprises a rear wall (24) to which an upper wall (25) is connected, which laterally conjoins to a side wall (23) situated on a side where the blades (4) of the rotor (3) have a rising motion in rotation thereof about the rotation axis (X), the upper wall (25) being inclined upwards and being arranged above the rotor (3), the angle of inclination of the upper wall (25) with respect to a horizontal plane being adjustable.

9. The snowblower fitting of claim 1, wherein the casing (2) comprises fixing means able to removably constrain the snowblower fitting to a brush cutter (100).

10. The snowblower fitting of claim 1, wherein the casing (2) is provided with wheels (2) predisposed to facilitate the motion along an advancing direction.

11. The snowblower fitting of claim 1, comprising a reducer (6), associated to the casing (2), predisposed for connecting a rotation shaft (31) of the rotor (3) to a drive shaft.

12. The snowblower fitting of claim 10, wherein the reducer (6) is associated to the casing (3) with freedom of motion about an adjusting axis (Y), adjusting means being predisposed to regulate the angular position of the reducer (6) with respect to the adjusting axis (Y).

13. The snowblower fitting of claim 12, wherein the adjusting means comprise a threaded rod (62), arranged with a longitudinal axis thereof lying on a vertical plane and associated to the reducer (2) with ability to rotate about a parallel axis to the adjusting axis (Y), and a pair of ringnuts (63), contactingly blockable to a plate (64) solidly constrained to the casing (2).

14. The snowblower fitting of any one of the preceding claims, **characterised in that** it comprises two of the counter-rotating rotors (3).

15. The snowblower fitting of claim 16, **characterised in that** it comprises a V-shaped lower edge (26) for each rotor (3), each rotor (3) being substantially superposed in plan on a respective lower edge (26).

16. A brush cutter (100) comprising a support bar (101) grippable by an operator, a first end of which support bar (101) is associated to an engine (102) for activating a rotating shaft (103) an end portion of which is located at a second end of the support bar (101), **characterised in that** it comprises a snowblower fitting according to any one of the preceding claims, removably associated to the second end of the support bar (101).
